# EUROPÄISCHE PATENTSCHRIFT

(11) **EP 0 682 473 B1**
(45) Veröffentlichungstag und Bekanntmachung des Hinweises auf die Patenterteilung: **21.05.1997**
(21) Anmeldenummer: 94905696.4
(22) Anmeldetag: 25.01.1994
(51) Int. Cl.: A01N 47/34

(54) **MITTEL ZUM SCHUTZ TECHNISCHER MATERIALIEN, INSBESONDERE HOLZ UND HOLZWERKSTOFFE**
AGENT FOR PROTECTING TECHNICAL MATERIALS, ESPECIALLY TIMBER AND TIMBER MATERIALS
AGENT PERMETTANT DE PROTEGER DES MATERIAUX TECHNIQUES, NOTAMMENT DU BOIS OU DES MATERIAUX DERIVES DU BOIS

(30) Priorität: 03.02.1993 DE 4303012
(43) Veröffentlichungstag der Anmeldung: 22.11.1995
(73) Patentinhaber: DESOWAG GmbH, D-40476 Düsseldorf (DE)
(72) Erfinder: METZNER, Wolfgang, D-47800 Krefeld (DE); WEGEN, Hans-Werner, D-47800 Krefeld (DE); PALLASKE, Michael, D-47906 Kempen (DE); SIMONIN, Jean, Brice, F-75017 Paris (FR); STIEFBOLD, Maurice, F-64200 Bassassurry (FR)
(74) Vertreter: Röhl, Wolf Horst, Dipl.-Phys., Dr.
(86) Internationale Anmeldenummer: EP9400185
(87) Internationale Veröffentlichungsnummer: WO9417664

(56) Entgegenhaltungen:
- EP-A- 0 180 313
- EP-A- 0 275 132
- BIOLOGICAL ABSTRACTS, xol. 84, no. 11 1987, Philadelphia, PA, US; abstract no. 113129, L.J.J. VAN LEEMPUT ET. AL. 'A laboratory experiment predicting aerial levels of azaconazole following use in wood preservation'
- CHEMICAL ABSTRACTS, vol. 93, no. 3, 21. Juli 1980, Columbus, Ohio, US; abstract no. 20674w, E.COHEN ET. AL. 'Inhibition of Tribolium gut chitin synthetase' Seite 216 ;

## Beschreibung

Die vorliegende Erfindung betrifft Mittel zum Schutz technischer Materialien, insbesondere Holz und Holzwerkstoffe, vor Schädigung oder Zerstörung durch biologische Schädlinge, insbesondere holzfressende Insekten, auf Basis mindestens eines insektiziden Wirkstoffes, neben mindestens einem Verdünnungs- und/oder Lösungsmittel sowie gegebenenfalls mindestens einem organisch-chemischen Bindemittel, gegebenenfalls mindestens einem weiteren Wirkstoff sowie gegebenenfalls weiteren Verarbeitungshilfs- und Zusatzmitteln. Die vorliegende Erfindung betrifft des weiteren eine Verfahren zum Schutz technischer Materialien, insbesondere Holz und Holzwerkstoffe, vor Schädigung oder Zerstörung durch biologische Schädlinge, insbesondere holzfressende Insekten, sowie die Verwendung des erfindungsgemäßen Holzschutzmittels.

Im Pflanzenschutz wird seit längerem erfolgreich eine neue Wirkstoffgruppe, die sogenannten Chitinsynthesehemmer, zur Bekämpfung saugender und beißender Insekten eingesetzt. Es handelt sich dabei um insektizid wirkende substituierte Benzoylharnstoffverbindungen, insbesondere auch substituierte N-Aroyl-N'-phenyl-harnstoffverbindungen.

Der spezifische Wirkungsmechanismus dieser Verbindungsklasse liegt darin, daß die vorgenannten substituierten Benzoylharnstoffverbindungen als Chitinsynthesehemmer in die Entwicklung, d. h. insbesondere in die larvalen Stadien von Insekten eingreifen. Dabei sind nicht nur die Häutungsstadien der Larve eines Schadinsekts betroffen, sondern auch die Metamorphose mit der Ausbildung einer Puppe bzw. eines fertigen Insekts wird beeinflußt, wobei die morphologischen Veränderungen in diesem Entwicklungsstadium ebenfalls zur Abtötung des Insekts führen. Aufgrund dieses Wirkungsmechanismus zeigen die Chitinsynthesehemmer im allgemeinen keinen Einfluß auf adulte Tiere.

Durch ihren Eingriff in die Chitinbildung unterscheidet sich diese neue Wirkstoffgruppe wesentlich von konventionellen Insektiziden, wie beispielsweise Cholinesterasehemmern oder den das Nervensystem von Insekten schädigenden Pyrethroiden, wobei die betreffenden substituierten Benzoylharnstoffverbindungen gegenüber diesen konventionellen Insektiziden entscheidende Vorteile aufweisen, da sie meist toxikologisch unbedenklich, hoch selektiv und nützlingsschonend sind.

Die vorgenannten Benzoylharnstoffverbindungen sind vorwiegend Fraßinsektizide, d. h. ihre Aufnahme erfolgt über den Resorptionsweg eines Insekts. Eine kontaktinsektizide Wirksamkeit konnte bei den üblichen Anwendungskonzentrationen nur in sehr geringem Maße festgestellt werden, weshalb eine schädigende Wirkstoffaufnahme durch Nutzinsekten, die lediglich mit dem Insektizid in Berührung kommen, weitgehend ausgeschlossen werden kann. Diese nutzinsektenschonende Eigenschaft und die wesentliche Einengung der biologischen Wirkung der Chitinsynthesehemmer auf Organismen, die über ein chitinhaltiges Außenskelett verfügen, sind die besonderen Vorteile der neuen Wirkstoffgruppe.

Insbesondere wegen dieser hohen Selektivität und keiner nachweisbaren Warmblütertoxizität wurde bereits vorgeschlagen, die Anwendung von Chitinsynthesehemmern über den reinen Pflanzenschutz hinaus auszudehnen. Es wurden beispielsweise als Wirkstoffe aus der Verbindungsklasse der substituierten Benzoylharnstoffverbindungen die Pflanzenschutzinsektizide Dimilin (Diflubenzuron) und Alsystin (Triflumuron) in ihrer Wirkung auf verschiedene Holzschädlinge getestet, wobei jedoch keine zufriedenstellenden Ergebnisse hinsichtlich wirksamer Anwendungskonzentrationen und Wirkungsbreite der getesteten Benzoylharnstoffe erhalten werden konnten.

Weiterhin ist aus EP-A-0 275 132 bekannt, Benzoylharnstoffe mit Fungiziden zu kombinieren bzw. die insektizide Benzoylharnstoffverbindung Flufenoxuron als Chitinsynthesehemmer gegen holzzerstörende Termiten einzusetzen.

Ein Holzschutzmittel auf Basis der bekannten Benzoylharnstoffverbindungen mit einem breiten Anwendungsbereich ist jedoch bisher nicht aus dem Stand der Technik bekannt. Dies hat insbesondere folgende Gründe: Die Eindringtiefe von Holzschutzmitteln beträgt üblicherweise im Streich-, Sprüh- und Tauchverfahren nur wenige Millimeter. Ein insektizider Wirkstoff muß daher in der Lage sein, eindringende Holzzerstörer innerhalb dieses Tränkbereiches des Holzes abzutöten. Herkömmliche Insektizide wie die häufig im Holzschutz verwendeten Pyrethroide sind hoch- und schnellwirksame Verbindungen, die in korrekter Dosierung einen sicheren Schutz bieten. Chitinsynthesehemmer wie Flufenoxuron sind langsam wirkende Fraßgifte, die nur auf das noch nicht vollentwickelte Insekt und nur unter der Voraussetzung, daß vom Schadorganismus eine hinreichend hohe Wirkstoffmenge aufgenommen wird, wirken. Diese Eigenschaften der Chitinsynthesehemmer machten ihren Einsatz im Holzschutz bislang unmöglich. Tiere, die ohne Häutung bzw. Metamorphose, d. h. ohne ein Entwicklungsstadium mit Ausbildung einer neuen Chitincuticula, die dünne Schutzzone durchfressen, werden nicht abgetötet und setzen im Inneren des Holzes ihren Schadfraß ungehindert fort.

Aufgabe der vorliegenden Erfindung war es, ein Mittel zum Schutz von Holz und Holzwerkstoffen bereitzustellen, in dem die vorgenannten substituierten Benzoylharnstoffverbindungen, insbesondere substituierte N-Aroyl-N'-phenyl-harnstoffverbindungen, als wirksame Insektizide mit den beschriebenen vorteilhaften Wirkungen eingesetzt werden können. Es sollte dabei außerdem eine Formulierung gefunden werden, die zu einer Verbesserung der Wirksamkeit der neuen Wirkstoffe gegen holzschädigende und -zerstörende Insekten führt, wobei die Anwendungskonzentrationen der Chitinsynthesehemmer möglichst gering sein sollten.

Es wurde nun ein Mittel zum Schutz technischer Materialien, insbesondere Holz und Holzwerkstoffe, gefunden, mit dem die vorgenannte Aufgabe gelöst wird. Gegenstand der Erfindung ist ein Mittel, das als insektiziden Wirkstoff (Komponente I) mindestens eine Benzoylharnstoffverbindung der allgemeinen Formel 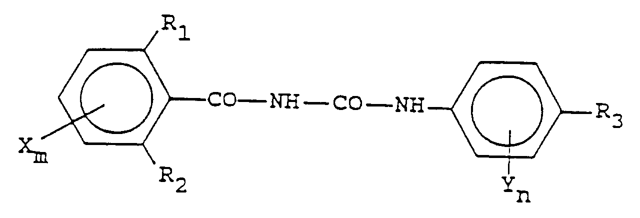 in der die Substituenten folgende Bedeutung haben:
- R₁: ist ein Halogen- oder Wasserstoffatom,
- R₂: ist ein Halogenatom,
- X: ist ein Wasserstoffatom, Halogenatom, eine Alkylgruppe, eine durch mindestens ein Halogenatom substituierte Alkylgruppe, eine Alkoxygruppe und/oder eine durch mindestens ein Halogenatom substituierte Alkoxygruppe,
wobei Halogen jeweils für Fluor, Chlor und/oder Brom steht,
- m: hat den Wert 1, 2 oder 3, wobei die Substituenten X gleich oder verschieden sind,
- Y: stellt ein Wasserstoffatom, Halogenatom, eine Alkylgruppe, eine durch mindestens ein Halogenatom substituierte Alkylgruppe und/oder eine Alkoxygruppe dar, wobei Halogen für Fluor, Chlor und/oder Brom steht,
- n: weist den Wert 1, 2, 3 oder 4 auf, wobei die Substituenten Y gleich oder verschieden sind,
- R₃: steht für ein Halogenatom oder eine durch mindestens ein Halogenatom substituierte Alkylgruppe, wobei Halogen für Fluor, Chlor und/oder Brom steht, oder R₃ ist eine Gruppe der Formel -OR, in der R eine durch mindestens ein Halogenatom substituierte Alkylgruppe darstellt und Halogen für Fluor, Chlor und/oder Brom steht, oder R ist ein substituierter Phenylrest der Formel 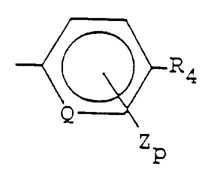 worin Z ein Wasserstoffatom, Halogenatom, eine Alkyl-, Halogenalkyl-, Polyhalogenalkyl-, Alkoxy-, Halogenalkoxy- und/oder Polyhalogenaloxygruppe bedeutet und p den Wert 1, 2, 3 oder 4 hat, wobei die Substituenten Z gleich oder verschieden sind und Halogen für Fluor, Chlor und/oder Brom steht; R₄ ist ein Halogenatom oder eine durch mindestens ein Halogenatom substituierte Alkylgruppe, wobei Halogen Fluor, Chlor und/oder Brom bedeutet, und Q steht für die Gruppe CH oder ein Stickstoffatom,
enthält, wobei dieser insektizide Wirkstoff (Komponente I) im Gemisch mit einer eine synergistische Wirkung erzeugende Menge mindestens eines Triazol-Fungizides (Komponente II) in dem Mittel enthalten ist.

Besonders bevorzugt wird als Komponente I mindestens eine Benzoylharnstoffverbindung der allgemeinen Formel 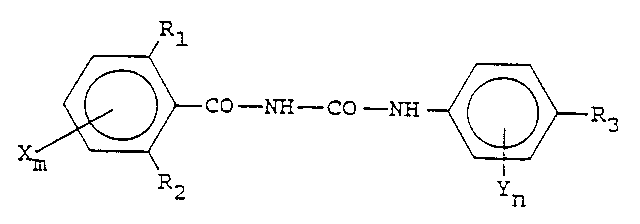 eingesetzt, in der die Substituenten folgende Bedeutung haben:
- R₁: ist ein Fluor, Chlor- oder Wasserstoffatom,
- R₂: bedeutet ein Fluor- oder Chloratom,
- X: steht für Wasserstoff, wobei m den Wert 3 hat
- Y: stellt ein Wasserstoff-, Fluor- und/oder Chloratom dar,
- n: weist den Wert 1, 2, 3 oder 4 auf, wobei die Substituenten Y gleich oder verschieden sind,
- R₃: steht für ein Fluor- oder Chloratom oder eine Gruppe der Formel -OR, in der R eine durch mindestens ein Halogenatom substituierte Alkylgruppe mit bis zu 6 C-Atomen darstellt, oder R ist ein substituierter Phenylrest der Formel 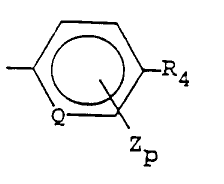 worin Z ein Wasserstoff, Fluor- und/oder Chloratom bedeutet und p den Wert 1, 2, 3 oder 4, wobei die Substituenten Z gleich oder verschieden sind; R₄ steht für eine durch mindestens ein Halogenatom substituierte Alkylgruppe mit bis zu 6 C-Atomen, wobei die vorgenannten Halogenatome vorzugsweise Fluor und/ oder Chlor sind, und Q steht für die Gruppe CH oder ein Stickstoffatom.

Es wurde dabei festgestellt, daß zur Ausrüstung von Holz gegen holzfressende Schadinsekten mit den vorgenannten substituierten Benzoylharnstoffverbindungen allein eine wirksame Auftragsmenge des Insektizids von mindestens 3 g/m² erforderlich ist, während hingegen durch die erfindungsgemäße synergistische Kombination mit einem Triazol-Fungizid eine überraschende Wirkungssteigerung von mindestens 100 % erreicht werden kann, wobei diese Wirkungssteigerung von der Menge an eingesetztem Triazol-Fungizid sowie insbesondere von der ausgewählten fungziden Triazolverbindung selbst abhängig ist. Das Einfressen der Larven holzzerstörender Insekten kann dadurch in zufriedenstellender Weise verhindert werden. Das Ausmaß des synergistischen Effekts ist dabei im Konzentrationsbereich von 0,6 bis 0,8 Gewichtsprozent bei Azaconazol am stärksten ausgeprägt.

Die durchgeführten Versuche zur Ermittlung der synergistischen Wirksamkeit des erfindungsgemäß eingesetzten Wirkstoffgemisches haben einen weiteren überraschenden Effekt aufgezeigt, der bewirkt, daß die Larven schon im ersten Stadium ihrer Existenz, in dem noch keine Häutung mit Ausbildung einer neuen Chitincuticula erfolgt, geschädigt und abgetötet werden. Eine Untersuchung des Magen-Darm-Traktes der toten und geschädigten Tiere ergab Hinweise auf eine Beeinträchtigung des Chitinnetzes (peritrophische Membran), das den Darminhalt von holzzerstörenden Insekten normalerweise umgibt, um die Darmwand vor Verletzung durch Holzsplitter zu schützen. Durch die synergistische Kombination von Triazol-Fungiziden mit den erfindungsgemäß eingesetzten Benzoylharnstoffverbindungen kommt es also zu einer überadditiven Steigerung der Wirksamkeit der insektiziden Komponente, die überraschenderweise dazu führt, daß - im Gegensatz zur Anwendung von beispielsweise Flufenoxuron allein - die Bildung der peritrophischen Membran bereits im frühen Larvenstadium behindert wird, wodurch eine Vorschädigung des Schadinsekts über den Magen-Darm-Trakt auch ohne Häutung erzielt wird, so daß das Eindringvermögen der Larven in das Holz bzw. ihre Fraßaktivität bereits in dieser Lebensphase deutlich herabgesetzt werden kann.

Diese vorteilhafte Wirkungssteigerung wird vorzugsweise durch ein Wirkstoffgemisch erzielt, in dem das Gewichtsverhältnis von Komponente I zu Komponente II 1 : 2 bis 1 : 20.000 beträgt. Die beanspruchten Werte des Gewichtsverhältnisses von substituierter Benzoylharnstoffverbindung zu dem Triazol-Fungizid variieren in Abhängigkeit von den zu bekämpfenden Insektenarten und ökonomischen Gesichtspunkten hinsichtlich der einzusetzenden insektiziden Wirkstoffkonzentration. Außerdem kann durch einen bestimmten Mindestgehalt an fungizider Komponente in dem Holzschutzmittel zusätzlich eine Wirksamkeit des Mittels gegen holzverfärbende, -schädigende und -zerstörende Pilze erreicht werden. Eine solche Wirkung ist bei den vorgenannten Gewichtsverhältnissen nicht notwendigerweise vorhanden.

Insbesondere wurde gefunden, daß unter diesen Gesichtspunkten ein Gewichtsverhältnis von Komponente I zu Komponente II in dem Mittel von 1 : 10 bis 10 : 15.000 bevorzugt wird.

Durch die synergistische Wirkungssteigerung ergibt sich der zusätzliche Vorteil, daß durch die anzuwendende geringe Menge an Komponente I in einem wirksamen insektiziden Holzschutzmittel gemäß der vorliegenden Erfindung eine wesentliche Konstenersparnis gegenüber der Anwendung der substituierten Benzoylharnstoffverbindung allein erzielt wird.

Es ist aber auch möglich, daß die Komponente I in einem höheren Gewichtsanteil als die Komponente II in dem erfindungsgemäßen Mittel vorliegt. Der synergistische Effekt geht hierdurch nicht verloren, jedoch wäre eine derartige Kombination der beiden Wirkstoffe in einem Holzschutzmittel zur Zeit unwirtschaftlich, da die erfindungsgemäß eingesetzten insektiziden Benzoylharnstoffverbindungen wesentlich teurer sind als die üblicherweise im Holzschutz verwendeten Triazol-Fungizide.

Erfindungsgemäß enthält das neue Holzschutzmittel mindestens eine Verbindung entsprechend Komponente I und mindestens eine Verbindung entsprechend Komponente II. Es können jedoch auch Gemische verschiedener Benzoylharnstoffverbindungen und/oder Gemische verschiedener Triazol-Fungizide eingesetzt werden.

Besonders vorteilhafte Wirkungen lassen sich mit einem Mittel erzielen, das als fungizide Komponente II ein Triazol-Fungizid, ausgewählt aus Azaconazol (1-[[2-(2,4-Dichlorphenyl)-1,3-dioxolan-2-yl]-methyl]-1H-1,2,4-triazol, Tebuconazol (α-[2-(4-Chlorphenyl)ethyl]-α-[1,1-dimethyl-ethyl]-1H-1,2,4-triazol-1-ethanol) und/oder Propiconazol (1-[[2-(2,4-Dichlorphenyl)-4-propyl-1,3-dioxolan-2-yl]-methyl]-1H-1,2,4-triazol), enthält.

Weiterhin wurde gefunden, daß als Komponente I vorzugsweise Flufenoxuron (1-[4-(2-Chlor-α,α,α-trifluor-p-tolyloxy)-2-fluorphenyl]-3-(2,6-difluorbenzoyl)-harnstoff), Hexaflumuron (1-(3,5-Dichlor-4-(1,1,2,2-tetrafluorethoxy)-phenyl]-3-(2,6-di-fluorbenzoyl)-harnstoff) und/oder Trifluron (1-(4-Trifluormethoxy-phenyl)-3-(2-chlorbenzoyl)-harnstoff) als Chitinsynthesehemmer in dem erfindungsgemäßen Mittel eingesetzt werden sollte. Auf Grund der beschriebenen Wirkungseigenschaften werden von den erfindungsgemäß eingesetzten synergistischen Wirkstoffgemischen die häutungsfähigen Entwicklungsstadien holo- und hemimetaboler Holzschadinsekten, insbesondere aus der Ordnung Coleoptera (Käfer), wie beispielsweise Hylotrupes bajulus, Anobium punctatum, Splintholzkäfer (Lyctidae) und Xestobium rufovillosum, und aus der Ordnung Isoptera (Termiten) beinflußt.

Da die Verbindungsklasse der erfindungsgemäß eingesetzten substituierten Benzoylharnstoffverbindungen eine sehr gute Lichtstabilität und Auswaschstabilität aufweist, treten keine Persistenzprobleme in den behandelten Hölzern auf.

Es ist bereits bekannt, die neuen Chitinsynthesehemmer für anwendungsfertige Formulierungen im Pflanzenschutz mit gebräuchlichen Insektiziden und Fungiziden zu kombinieren, ohne daß hierdurch Beeinträchtigungen in ihrer Wirksamkeit auftreten. Es wurde daher festgestellt, daß das synergistische Wirkstoffgemisch in dem erfindungsgemäßen Holzschutzmittel mit weiteren Wirkstoffen, nämlich im Holzschutz üblichen Insektiziden und Fungiziden versetzt werden kann, um das Wirkungsspektrum zu erweitern.

Darüberhinaus enthält das erfindungsgemäße Holzschutzmittel mindestens ein Verdünnungs- und/oder Lösungsmittel, gegebenenfalls mindestens ein organisch-chemisches Bindemittel sowie gegebenenfalls ein weiteres Verarbeitungshilfs- und Zusatzmittel.

Vorzugsweise enthält das Mittel bis zu 99,94995 Gew.-% eines Gemisches, bestehend aus mindestens einem organisch-chemischen Bindemittel und mindestens einem Verdünnungsmittel und/oder Lösungsmittel und/oder mindestens einem Emulgator und/oder Netzmittel.

Das Verdünnungs- und/oder Lösungsmittel enthält bevorzugt ein organisch-chemisches Lösungsmittel oder Lösungsmittelgemisch, vorzugsweise ein öliges oder ölartiges, schwerflüchtiges, organisch-chemisches Lösungsmittel oder Lösungsmittelgemisch oder ein Gemisch aus Wasser und/oder mindestens einem organisch-chemischen Lösungsmittel, vorzugsweise mindestens einem öligen oder ölartigen, schwerflüchtigen, organisch-chemischen Lösungsmittel oder Lösungsmittelgemisch, und/oder mindestens einem Emulgator und/oder Netzmittel, oder das Verdünnungs- und/oder Lösungsmittel besteht aus einem oder mehreren dieser Bestandteile.

Als Lösungsmittel werden polare oder unpolare organischchemische Lösungsmittel oder Lösungsmittelgemische oder Mischungen aus polaren und unpolaren organisch-chemischen Lösemitteln oder Gemische aus Wasser und einem organisch-chemischen Lösemittel, vorzugsweise einem polaren organisch-chemischen Lösungsmittel oder Lösungsmittelgemisch, und mindestens einem Emulgator bzw. Lösungsmittler eingesetzt.

Als polare organisch-chemische Lösungsmittel oder Lösungsmittelgemische werden bevorzugt Hydroxy- und/oder Ethergruppen und/oder Ketogruppen und/oder Estergruppen enthaltende Lösungsmittel oder Lösungsmittelgemische eingesetzt. Vorzugsweise gelangen Alkohole, Glykole, Glykolether, Diacetonalkohol, wasserlösliche Polyole und deren Ester zum Einsatz.

Als unpolare Lösungsmittel oder Lösungsmittelgemische können aliphatische oder aromatische Kohlenwasserstoffe oder ein Lösungsmittelgemisch aus aromatischen und aliphatischen KWS eingesetzt werden.

Es können insbesondere aber auch schwerflüchtige, ölige oder ölartige Lösungsmitttel mit einer Verdunstungszahl über 35 und einem Flammpunkt oberhalb 30°C, vorzugsweise oberhalb 45°C, eingesetzt werden. Als derartige schwerflüchtige wasserunlösliche, ölige oder ölartige Lösungsmittel werden entsprechende Mineralöle oder deren Aromatenfraktionen oder mineralölhaltige Lösungsmittelgemische, vorzugsweise Testbenzin, Spindelöl, Petroleum, Terpentinöl, Terpenkohlenwasserstoffe, aromatenfreie Petroleumfraktionen und/oder Alkylbenzole usw., verwendet.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend Acrylatharz, ein Vinylharz, z.B. Polyvinylacetat, Polyesterharz, Polykondensations- oder Polyadditionsharz, Polyurethanharz, Alkydharz, Siliconharz, trocknende pflanzliche und/oder trocknende Öle und/oder physikalisch trocknende Bindemittel auf der Basis eines Natur- und/oder Kunstharzes verwendet.

Als Bindemittel können insbesondere Kunstharze in Form einer Emulsion, Dispersion oder Lösung, vorzugsweise Alkydharze bzw. modifizierte Alkydharze oder Phenolharze und/oder Kohlenwasserstoffharze, vorzugsweise Inden-Cumaronharze, verwendet werden. Als Bindemittel können aber auch Bitumen oder bituminöse Substanzen bis zu 10 Gew.-% eingesetzt werden.

Das organisch-chemische Bindemittel oder Bindemittelgemisch kann ganz oder teilweise durch mindestens ein Fixierungsmittel und/oder mindestens einen Weichmacher ersetzt sein.

Als Emulgiermittel erhält das erfindungsgemäße Holzschutzmittel anionische oder kationische Emulgatoren oder Emulgatorgemische. Als Beispiele für anionische Emulgatoren seien Alkyl-, Aryl- und/oder Alkylarylsulfonate oder Phosphorsäurepartialester genannt. Als kationische Emulgatoren können quaternäre Ammoniumverbindungen zum Einsatz kommen.

Vorzugsweise werden nichtionische Emulgatoren oder Emulgatorgemische eingesetzt, beispielsweise Alkylpolyglykolether oder -ester und/oder Alkylarylpolyglykolether oder -ester, Alkylphenolpolyglykolether, Polyoxyethylenderivate, Carbonsäurepolyethylenglykolester, Alkylolamide, eine Seitengruppe enthaltende ethoxylierte Phenole, vorzugsweise ethoxyliertes Nonylphenol und/oder eine ethoxylierte Fettsäure, Fettsäureester von Polyhydroxyverbindungen, insbesondere Mono- und Difettsäureester von Glycerin, Polyglycerin oder Glycerinpolyethylen- oder Polypropylenglykolethern.

Die Emulgatoren können auch mit Netzmitteln kombiniert werden, z. B. mit Netzmitteln auf Basis organischer Phosphoraminverbindungen.

Insbesondere zur Herstellung von Emulsionskonzentraten oder wasserhaltigen Holzschutzmitteln werden die organisch-chemischen Lösungsmittel insbesondere mit Lösungsmitteln, vorzugsweise Hydroxyl- oder Ethergrupppen enthaltenden Lösungsmitteln oder Lösungsvermittlern, vermischt.

Als organisch-chemische polare Lösungsmittel werden Hydroxylgruppen und/oder Ethergruppen und/oder Ketogruppen enthaltende organisch-chemische Lösungsmittel verwendet.

Als Hydroxylgruppen und/oder Ethergruppen und/oder Ketogruppen enthaltende organisch-chemische Lösungsmittel werden vorzugsweise Ethylenglykol (2-Hydroxyethanol), Diethylenglykol (2,2-Dihydroxy-diethylether), Ethylglykol (2-Hydroxy-diethylether), Butylglykol (1-Hydroxy-2-n-butoxy-ethan) und/oder Ethyldiglykol (2-Hydroxy-2-ethoxy-diethylether) und/oder Diacetonalkohol eingesetzt.

Als Lösungsmittler werden anionenaktive oder kationenaktive, vorzugsweise jedoch nichtionische Tenside verwendet, welche die Wirkstoffe lösen und zusammen mit Wasser eine stabile Emulsion bilden.

Als Beispiele für anionische Tenside seien Alkyl-, Aryl- und/oder Alkylarylsulfonate, für kationische Tenside quaternäre Ammoniumverbindungen genannt. Als Beispiele für nichtionische Tenside sind Alkylpolyglykolether oder -ester und/oder Alkylarylpolyglykolether oder -ester, Polyoxyethylenderivate, ethoxyliertes Nonylphenol, Fettsäureester von Polyhydroxyverbindungen, wie insbesondere Mono- und Difettsäureester von Glycerin, Polyglycerin oder Glycerinpolyethylen- oder -polypropylenglykolethern, zu nennen.

Das erfindungsgemäße Mittel kann zusätzlich an sich bekannte Farbstoffe, Pigmente, wasserabweisende Mittel, Geruchskorrigentien und -inhibitoren bzw. Korrosionsschutzmittel und dgl. enthalten. Als weiterer Zusatz kann in dem erfindungsgemäßen Mittel ein Aminoalkohol zur pH-Wertregulierung und/oder als Co-Emulgatur, vorzugsweise Monoethanolamin, enthalten sein.

Für bestimmte Rezepturen kann es zweckmäßig sein, Antischaummittel wie Silikonentschäumer oder Alkylphosphate, vorzugsweise n-Butylphosphat, zuzusetzen.

Weiterhin können andere Zusatzmittel, wie beispielsweise UV-Stabilisatoren, Verdickungsmittel sowie Sikkative zugefügt werden. Als Sikkative (Trockenstoffe), die vorzugsweise in Kombination mit einem Bindemittel auf der Basis eines pflanzlichen Öles eingesetzt werden, gelangen vorzugsweise Kobalt-, Zink-, Cer- und/oder Manganoctoat und/oder -naphthenat zur Verwendung.

Als Rückverdünnungsmittel zur Herstellung von anwendungsfertigen Mitteln aus Konzentraten werden die vorgenannten Verdünnungsmittel oder Verdünnungsmittelgemische, gegebenenfalls in Kombination mit Bindemitteln, Zusatzstoffen, Verarbeitungshilfsmitteln, Farbstoffen, Farbpigmenten, UV-Stabilisatoren, Korrosionsinhibitoren und dgl., eingesetzt.

Zusätzlich kann das erfindungsgemäße Holzschutzmittel ein Stabilisierungsmittel oder Stabilisierungsmittelgemisch auf Basis mindestens eines Aryl-, Alkyl- oder Arylalkyl-Gruppen tragenden Phenols, eines Bisphenols oder Bisphenolderivates, eines Bis-hydroxyarylalkans oder Bis-hydroxyarylalkanderivates, eines Polyoxypolyphenylalkans und/oder mindestens eines Phosphatids enthalten.

Mit Hilfe des Stabilisierungsmittels oder Stabilisierungsmittelgemisches gelingt es, die Wirkstoffe chemisch und/oder physikalisch stabil in dem Holzschutzmittel zu halten, selbst wenn der Anteil an aliphatischen Kohlenwasserstoffen sehr hoch ist.

Das erfindungsgemäße Holzschutzmittel kann in Form eines Konzentrates oder als anwendungsfertiges Mittel, beispielsweise als Anstrichmittel in Form einer Lasur, insbesondere einer Farblasur, oder als Tränkmittel vorliegen, wobei das anwendungsfertige Mittel eine entsprechende Menge mindestens eines Verdünnungsmittels sowie gegebenenfalls weitere Verarbeitungshilfs- und Zusatzstoffe enthält.

Nach einer bevorzugten Ausführungsform der vorliegenden Erfindung enthält das erfindungsgemäße Mittel als anwendungsfertiges Mittel
0,00005 bis 0,5 Gew.-% vorzugsweise
0,0001 bis 0,2 Gew.-%,
der Komponente I,
0,05 bis 2 Gew.-% vorzugsweise
0,25 bis 1,5 Gew.-%,
der Komponente II,
0,9 bis 40 Gew.-% vorzugsweise
3 bis 33 Gew.-%,
mindestens eines organisch-chemischen Bindemittels und/oder Weichmachers und/oder Fixierungsmittels,
0 bis 8 Gew.-% vorzugsweise
0,1 bis 4 Gew.-%,
mindestens eines wasserlöslichen und/oder wasserunlöslichen Farbstoffes, Farbpigmentes udn/oder Korrosionsschutzmittels, Sikkatives und/oder Stabilisators und
44 bis 99 Gew.-% vorzugsweise
58 bis 95 Gew.-%,
eines Verdünnungsmittels, bestehend aus einem organischchemischen Lösungsmittel oder Lösungsmittelgemisch oder aus einem Gemisch aus Wasser und mindestens einem Emulgator und/oder Netzmittel.

Nach einer anderen bevorzugten Ausführungsform der vorliegenden Erfindung enthält das erfindungsgemäße Mittel als Konzentrat
0,002 bis 5 Gew.-% vorzugsweise
0,003 bis 2 Gew.-%,
der Komponente I,
0,01 bis 20 Gew.-% vorzugsweise
1 bis 8 Gew.-%,
der Komponente II und
2 bis 85 Gew.-% vorzugsweise
8 bis 60 Gew.-%,
mindestens eines organisch-chemischen Bindemittels und/oder Weichmachers und/oder Fixierungsmittels sowie einem Restbestandteil, bestehend aus einem organisch-chemischen Lösungsmittel oder Lösungsmittelgemisch oder einem Gemisch aus Wasser und mindestens einem organisch-chemischen Lösungsmittel und mindestens einem Emulgator und/oder oder Netzmittel sowie gegebenenfalls Farbstoffen, Farbpigmenten, Korrosionsschutzmitteln, Sikkativen und/oder Stabilisatoren.

Die vorliegende Erfindung betrifft des weiteren ein Verfahren zum Schutz technischer Materialien, insbesondere Holz und Holzwerkstoffe, vor Schädigung oder Zerstörung durch biologische Schädlinge, insbesondere holzfressende Insekten, wobei man das Holz oder den Holzwerkstoff mit einer wirksamen Menge des erfindungsgemäßen Mittels behandelt.

Die Behandlung des Holzes erfolgt dadurch, daß das erfindungsgemäße Mittel nach bekannten Verfahren, wie beispielsweise Streichen, Spritzen, Sprühen, oder unter Anwendung von Imprägnierverfahren, wie beispielsweise Tauch-, Druck-, Vakuum- oder Doppelvakuumverfahren, auf das Holz aufgebracht wird.

Das Holz oder der Holzwerkstoff wird bevorzugt mit einer Menge von 0,5 bis 2000 g, bezogen auf die synergistische Wirkstoffkombination, pro Kubikmeter Holz behandelt.

Das erfindungsgemäße Mittel wird zur Bekämpfung larvaler Stadien holzschädigender und/oder holzzerstörender Insekten in technischen Materialien, insbesondere Holz und Holzwerkstoffen, die bereits durch Holzschädlinge befallen sind, verwendet.

Es kann aber auch zum vorbeugenden Schutz gegen den Befall technischer Materialien, insbesondere Holz und Holzwerkstoffe, durch larvale Stadien holzschädigender und/oder holzzerstörender Insekten eingesetzt werden.

Des weiteren kann das erfindungsgemäße Mittel zusätzlich fungizide Eigenschaften aufweisen, so daß es eine vorbeugende oder Bekämpfende Wirkung gegen holzverfärbende, -schädigende und/oder -zerstörende Pilze hat, vorzugsweise gegen holzzerstörende Basidiomyceten, wie beispielsweise Serpula lacrimans, Gloeophyllum spec., Poria spec., Lentinus spec., Donkioporia expansa, insbesondere Coniophora puteana, Poria placenta, Gloeophyllum trabeum und Coriolus versicolor, sowie gegen andere holzzerstörende und/oder holzverfärbende Bläuepilze, wie beispielsweise Aureobasidium spec., Sclerophoma spec., Ceratocystis spec., Cladosporium spec., sowie Schimmelpilze, wie beispielsweise Aspergillus spec., Penicillium funicolosum und Trichoderma viride, und Moderfäulepilze, wie beispielsweise Chaetomium globosum, Glenospora graphii, Humicola grisea, Petriella setifera, Phialophora mutabilis und Trichurus spiralis.

In diesem Fall enthält das erfindungsgemäße Mittel vorzugsweise mehr als 0,25 Gew.-% der fungiziden Komponente II.

Als Grundieranstrichmittel, Imprägnieranstrichmittel oder als Farblasur wird das erfindungsgemäße Mittel bevorzugt in einer Auftragsmenge von 0,002 bis 1 g, bezogen auf die synergistische Wirkstoffkombnination, pro Quadratmeter Holzoberfläche angewendet.

Als Tauch- oder Tränkmittel wird es vorzugsweise in einer Menge von 30 bis 150 g, bezogen auf die synergistische Wirkstoffkombination, pro Kubikmeter Holz angewendet.

### Erläuterungen zur Figur

Figur 1:
   Mortalität in % nach 4 Wochen Exposition für den Wirkstoff Flufenoxuron und für die Wirkstoff-Kombinationen von Flufenoxuron mit den Fungiziden Propiconazol, Tebuconazol oder Azaconazol. Es bedeuten:
   A = Flufenoxuron (3 g/m³ )
   B = Flufenoxuron mit Propiconazol
   C = Flufenoxuron mit Tebuconazol
   D = Flufenoxuron mit Azaconazol
   (Fungizid-Menge jeweils bezogen auf das Gesamtgewicht des getesteten Mittels: 0,6 Gew.-%, 0,8 Gew.-% bzw. 1,0 Gew.-%)

### Beispiele

### 1. Bekämpfendes Holzbehandlungsmittel

| | |
|---|---|
| Flufenoxuron | 0,03 Gew.-% |
| Tebuconazol | 0,7 Gew.-% |
| Fixierungsmittel (Polyglykole) | 3,0 Gew.-% |
| Lösungsmittel (Testbenzin) | 96,27 Gew.-% |

### 2. Holzbehandlungsmittel mit grundierender Wirkung

| | |
|---|---|
| Flufenoxuron | 0,05 Gew.-% |
| Tebuconazol | 0,9 Gew.-% |
| Dichlofluanid | 0,6 Gew.-% |
| Alkydharz (fest) | 12,0 Gew.-% |
| Lösungsmittel (Testbenzin) | 86,45 Gew.-% |

### 3. Lasurartiges Holzbehandlungsmittel

| | |
|---|---|
| Flufenoxuron | 0,05 Gew.-% |
| Tebuconazol | 0,9 Gew.-% |
| Dichlofluanid | 0,6 Gew.-% |
| Pigment | 3,0 Gew.-% |
| Hilfsstoffe (Netzmittel, Sikkative etc.) | 3,0 Gew.-% |
| Alkydharz (fest) | 23,0 Gew.-% |
| Lösungsmittel (Testbenzin) | 69,45 Gew.-% |

### 4. Synergistische Wirksamkeit von Wirkstoffkombinationen

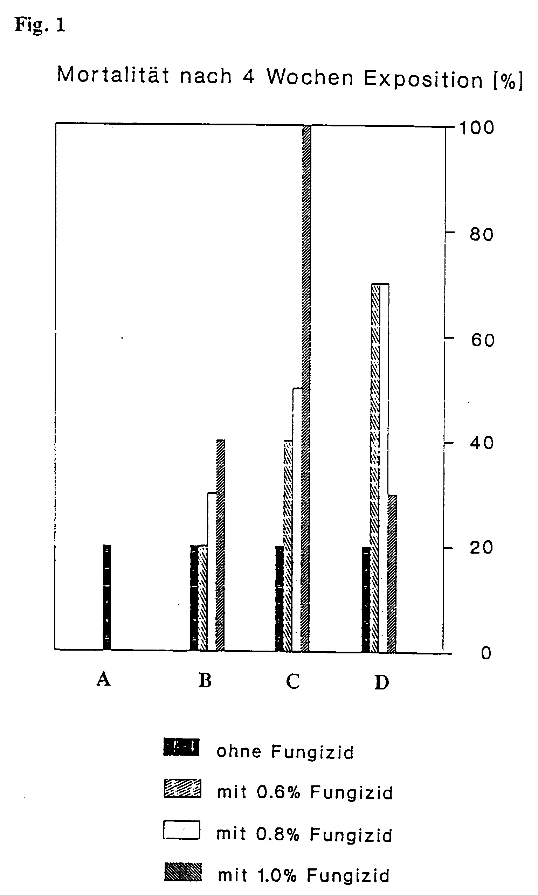

In der beigefügten Fig. 1 ist die synergistische Wirksamkeit (Fraßgiftwirkung; Fraßtest mit Brettchen) der Kombinationen Flufenoxuron mit Propiconazol, Flufenoxuron mit Tebuconazol und Flufenoxuron mit Azaconazol innerhalb des erfindungsgemäß bevorzugt beanspruchten Gewichtsverhältnisses von Komponente I zu Komponente II von 1 : 10 bis 1 : 15.000 gegen den Holzschädling Hylotrupes bajulus (Hausbockkäfer) sowie (als Vergleich) die insektizide Wirksamkeit von Flufenoxuron allein gegen den vorgenannten Holzschädling graphisch dargestellt.

Die Komponente I, Flufenoxuron, wurde dabei mit verschiedenen Mengen der jeweiligen Triazol-Fungizide kombiniert, wobei sich die angegebenen Prozentwerte (= Gewichtsprozente) der fungiziden Komponente II auf das Gesamtgewicht des Mittels beziehen.

In der beigefügten Tabelle 1 ist die synergistische Wirksamkeit (Fraßgiftwirkung; Fraßtest mit Brettchen) der Kombination Flufenoxuron mit Propiconazol, Flufenoxuron mit Tebuconazol und Flufenoxuron mit Azaconazol innerhalb des erfindungsgemäß bevorzugt beanspruchten Gewichtsverhältnisses von Komponente I zu Komponente II von 1 : 10 bis 1 : 15.000 gegen den Holzschädling Hylotrupes bajulus (Hausbockkäfer) sowie (als Vergleich) die insektizide Wirksamkeit von Flufenoxuron allein gegen den vorgenanten Holzschädling noch einmal tabellarisch dargestellt. Die Komponente I, Flufenoxuron, wurde dabei ebenfalls mit verschiedenen Mengen der jeweiligen Triazol-Fungizide kombiniert, wobei sich die angegebenen Prozentwerte (= Gewichtsprozente) der Wirkstoffkomponenten auf das Gesamtgewicht des Mittels beziehen. Die dimensionslosen Zahlenwerte der Tabelle geben die Mortalitätsraten der getesteten Prüfinsekten in Prozent an.

Eine besonders deutliche synergistische Wirkungssteigerung der insektiziden Benzoylhärnstoffverbindung wurde bei den durchgeführten Versuchen bei den Kombination von Flufenoxuron (0,00063 Gew.-%) mit 0,6 Gew.-% Azaconazol bzw. mit 0,8 Gew.-% Azaconazol sowie von Flufenoxuron (0,00063 Gew.-%) mit 1,0 Gew.-% Tebuconazol festgestellt, wie die entsprechenden Mortalitätsraten, die in der Tabelle der Fig. 1 wiedergegeben sind, zeigen.

Bei der Kombination von Flufenoxuron (0,00063 Gew.-%) mit 1,0 Gew.-% Azaconazol ist außerdem bereits eine Abnahme des Synergismus-Effektes zu beobachten.

**Tabelle 1**

| | Propiconazol | Tebuconazol | Azaconazol |
|---|---|---|---|
| Flufenoxuron (0,00063%) | 20 | 20 | 20 |
| Fungizid (5%) | 0 | 0 | 0 |
| Flufenox. + Fungizid (0,6%) | 20 | 40 | 70 |
| Flufenox. + Fungizid (0,8%) | 30 | 50 | 70 |
| Flufenox. + Fungizid (1,0%) | 40 | 100 | 30 |
| (Flufenox. = Flufenoxuron) Mortilität in % | | | |

## Patentansprüche

1. Mittel zum Schutz technischer Materialien, insbesondere Holz und Holzwerkstoffe, vor Schädigung oder Zerstörung durch biologische Schädlinge, insbesondere holzfressende Insekten, auf Basis mindestens eines insektiziden Wirkstoffes neben mindestens einem Verdünnungs- und/oder Lösungsmittel sowie gegebenenfalls mindestens einem organisch-chemischen Bindemittel, gegebenenfalls mindestens einem weiteren Wirkstoff sowie gegebenenfalls weiteren Verarbeitungshilfs- und Zusatzmitteln, dadurch gekennzeichnet, daß der insektizide Wirkstoff (Komponente I) mindestens eine Benzoylharnstoffverbindung der allgemeinen Formel 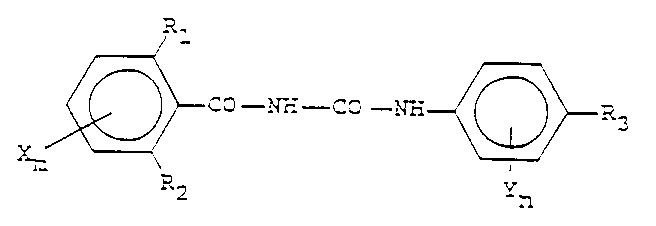 in der die Substituenten folgende Bedeutung haben:
R₁ ist ein Halogen- oder Wasserstoffatom,
R₂ ist ein Halogenatom,
X ist ein Wasserstoffatom, Halogenatom, eine Alkylgruppe, eine durch mindestens ein Halogenatom substituierte Alkylgruppe, eine Alkoxygruppe und/oder eine durch mindestens ein Halogenatom substituierte Alkoxygruppe,
wobei Halogen jeweils für Fluor, Chlor und/oder Brom steht,
m hat den Wert 1, 2 oder 3, wobei die Substituenten X gleich oder verschieden sind,
Y stellt ein Wasserstoffatom, Halogenatom, eine Alkylgruppe, eine durch mindestens ein Halogenatom substituierte Alkylgruppe und/oder eine Alkoxygruppe dar, wobei Halogen für Fluor, Chlor und/oder Brom steht,
n weist den Wert 1, 2, 3 oder 4 auf, wobei die Substituenten Y gleich oder verschieden sind,
R₃ steht für ein Halgoenatom oder eine durch mindestens ein Halogenatom substituierte Alkylgruppe, wobei Halogen für Fluor, Chlor und/oder Brom steht, oder R₃ ist eine Gruppe der Formel -OR, in der R eine durch mindestens ein Halogenatom substituierte Alkylgruppe darstellt und Halogen für Fluor, Chlor und/oder Brom steht, oder R ist ein substituierter Phenylrest der Formel 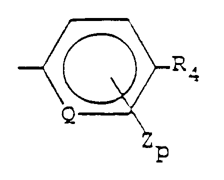 worin Z ein Wasserstoffatorn, Halogenatom, eine Alkyl-, Halogenalkyl-, Polyhalogenalkyl-, Alkoxy-, Halogenalkoxy- und/oder Polyhalogenaloxygruppe bedeutet und p den Wert 1, 2, 3 oder 4 hat, wobei die Substituenten Z gleich oder verschieden sind und Halogen für Fluor, Chlor und/oder Brom steht; R₄ ist ein Halogenatom oder eine durch mindestens ein Halogenatom substituierte Alkylgruppe, wobei Halogen Fluor, Chlor und/oder Brom bedeutet, und Q steht für die Gruppe CH oder ein Stickstoffatom,
ist und im Gemisch mit einer eine synergistische Wirkung erzeugenden Menge mindestens eines Triazol-Fungizides (Komponente II) in Form von Azaconazol, Tebuconacol und/oder Propiconazol in dem Mittel enthalten ist.

2. Mittel nach Anspruch 1, dadurch gekennzeichnet, daß die Komponente I eine Benzyolharnstoffverbindung der allgemeinen Formel 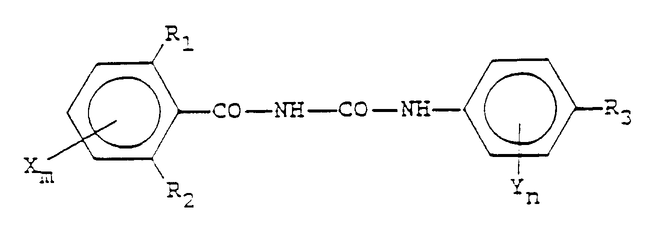 ist, in der die Substituenten folgende Bedeutung haben:
R₁ ist ein Fluor, Chlor- oder Wasserstoffatom,
R₂ bedeutet ein Fluor- oder Chloratom,
X steht für Wasserstoff, wobei m den Wert 3 hat
Y stellt ein Wasserstoff-, Fluor- und/oder Chloratom dar,
n weist den Wert 1, 2, 3 oder 4 auf, wobei die Substituenten Y gleich oder verschieden sind,
R₃ steht für ein Fluor- oder Chloratom oder eine Gruppe der Formel -OR, in der R eine durch mindestens ein Halogenatom substituierte Alkylgruppe mit bis zu 6 C-Atomen darstellt, oder R ist ein substituierter Phenylrest der Formel 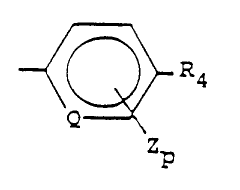 worin Z ein Wasserstoff, Fluor- und/oder Chloratom bedeutet und p den Wert 1, 2, 3 oder 4 hat, wobei die Substituenten Z gleich oder verschieden sind; R₄ steht für eine durch mindestens ein Halogenatom substituierte Alkylgruppe mit bis zu 6 C-Atomen, wobei die vorgenannten Halogenatome vorzugsweise Fluor und/oder Chlor sind, und Q steht für die Gruppe CH oder ein Stickstoffatom.

3. Mittel nach Anspruch 1 oder 2, dadurch gekennzeichnet, daß die Komponente I Flufenoxuron, Hexaflumuron und/oder Trifluoron ist.

4. Mittel nach einem der Ansprüche 1 bis 3, dadurch gekennzeichnet, daß das Gewichtsverhältnis von Komponente I zu Komponente II
1 : 2 bis 1 : 20.000, vorzugsweise
1 : 10 bis 1 : 15.000
beträgt.

5. Mittel nach einem der Ansprüche 1 bis 4, dadurch gekennzeichnet, daß das Mittel
bis zu 99,94995 Gew.-%
eines Gemisches, bestehend aus mindestens einem organisch-chemischen Bindemittel und mindestens einem Verdünnungsmittel und/oder Lösungsmittel und/oder mindestens einem Emulgator und/oder Netzmittel, enthält.

6. Mittel nach einem der Ansprüche 1 bis 5, dadurch gekennzeichnet, daß das Verdünnungs- und/oder Lösungsmittel ein organisch-chemisches Lösungsmittel oder Lösungsmittelgemisch, vorzugsweise ein öliges oder ölariges, schwerflüchtiges organischchemisches Lösungsmittel oder Lösungsmittelgemisch oder ein Gemisch aus Wasser und/oder mindestens einem organisch-chemischen Lösungsmittel, vorzugsweise mindestens einem öligen oder ölartigen, schwerflüchtigen organisch-chemischen Lösungsmittel oder Lösungsmittelgemisch, und/oder mindestens einem Emulgator und/oder Netzmittel enthält oder daraus besteht.

7. Mittel nach einem der Ansprüche 1 bis 6, dadurch gekennzeichnet, daß das organisch-chemische Bindemittel ganz oder teilweise durch mindestens ein Fixierungsmittel und/oder mindestens einen Weichmacher ersetzt ist.

8. Mittel nach einem der Ansprüche 1 bis 7, dadurch gekennzeichnet, daß das es als anwendungsfertiges Mittel
0,00005 bis 0,5 Gew.-% vorzugsweise
0,0001 bis 0,2 Gew.-%,
der Komponente I,
0,05 bis 2 Gew.-% vorzugsweise
0,25 bis 1,5 Gew.-%,
der Komponente II,
0,9 bis 40 Gew.-% vorzugsweise
3 bis 33 Gew.-%,
mindestens eines organisch-chemischen Bindemittels und/oder Weichmachers und/oder Fixierungsmittels,
0 bis 8 Gew.-% vorzugsweise
0,1 bis 4 Gew.-%,
mindestens eines wasserlöslichen und/oder wasserunlöslichen Farbstoffes, Farbpigmentes und/oder Korrosionsschutzmittels, Sikkatives und/oder Stabilisators und
44 bis 99 Gew.-% vorzugsweise
58 bis 95 Gew.-%,
eines Verdünnungsmittels, bestehend aus einem organischchemischen Lösungsmittel oder Lösungsmittelgemisch oder aus einem Gemisch aus Wasser und mindestens einem Emulgator und/oder Netzmittel, enthält.

9. Mittel nach einem der Ansprüche 1 bis 7, dadurch gekennzeichnet, daß es als Konzentrat
0,002 bis 5 Gew.-%, vorzugsweise
0,003 bis 2 Gew.-%,
der Komponente I,
0,01 bis 20 Gew.-% vorzugsweise
1 bis 8 Gew.-%,
der Komponente II und
2 bis 85 Gew.-% vorzugsweise
8 bis 60 Gew.-%,
mindestens eines organisch-chemischen Bindemittels und/oder Weichmachers und/oder Fixierungsmittels sowie einem Restbestandteil, bestehend aus einem organisch-chemischen Lösungsmittel oder Lösungsmittelgemisch oder einem Gemisch aus Wasser und mindestens einem organisch-chemischen Lösungsmittel und mindestens einem Emulgator und/oder Netzmittel sowie gegebenenfalls Farbstoffen, Farbpigmenten, Korrosionsschutzmitteln, Sikkativen und/oder Stabilisatoren, enthält.

10. Verfahren zum Schutz technischer Materialien, insbesondere Holz und Holzwerkstoffe, vor Schädigung oder Zerstörung durch biologische Schädlinge, insbesondere holzfressende Insekten, dadurch gekennzeichnet, daß man das Holz oder den Holzwerkstoff mit einer wirksamen Menge eines Mittels gemäß einem oder mehreren der Ansprüche 1 bis 9 behandelt.

11. Verfahren nach Anspruch 10, dadurch gekennzeichnet, daß das Holz oder der Holzwerkstoff mit einer Menge von 0,5 bis 2000 g, bezogen auf die synergistische Wirkstoffkombination, pro Kubikmeter Holz behandelt wird.

12. Verwendung des Mittels nach einem der Ansprüche 1 bis 9 zur Bekämpfung larvaler Stadien holzschädigender und/oder holzzerstörender Insekten in technischen Materialien, insbesondere Holz und Holzwerkstoffen.

13. Verwendung des Mittels nach einem der Ansprüche 1 bis 9 zum vorbeugenden Schutz technischer Materialien, insbesondere Holz und Holzwerkstoffe, durch larvale Stadien holzschädigender und/oder oder holzzerstörender Insekten.

14. Verwendung des Mittels nach Anspruch 12 oder 13, dadurch gekennzeichnet, daß das Mittel zusätzlich fungizide Eigenschaften aufweist und gegen holzverfärbende, -schädigende und/oder holzzerstörende Pilze eingesetzt wird.

15. Verwendung des Mittels nach Anspruch 14, dadurch gekennzeichnet, daß das Mittel mehr als 0,25 Gew.-% der fungiziden Komponente II enthält.

16. Verwendung des Mittels nach einem der Ansprüche 1 bis 9 als Grundieranstrichmittel, Imprägnieranstrichmitttel oder als Farblasur in einer Auftragsmenge von 0,002 bis 1 g, bezogen auf die synergistische Wirkstoffkombination, pro Quadratmeter Holzoberfläche.

17. Verwendung des Mittels nach einem der Ansprüche 1 bis 9 als Tauch- oder Tränkmittel in einer Menge von 30 bis 150 g, bezogen auf die synergistische Wirkstoffkombination, pro Kubikmeter Holz.

## Claims

1. Agent for protecting technical materials, especially timber and timber materials, from damage or destruction by biological pests, especially wood-eating insects, based on at least one insecticidal active substance in addition to at least one thinner and/or solvent as well as if necessary at least one organic chemical binding agent, if necessary at least one further active substance and if necessary further auxiliary treatment agents and additives, characterised in that the insecticidal active substance (component I) is at least one benzoyl urea compound of the general formula 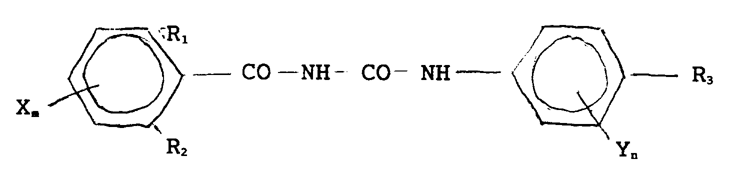 in which the substituents have the following significance:
R₁ is a halogen or hydrogen atom,
R₂ is a halogen atom,
X is a hydrogen atom, halogen atom, an alkyl group, an alkyl group substituted by at least one halogen atom, an alkoxy group and/or an alkoxy group substituted by at least one halogen atom,
halogen standing respectively for fluorine, chlorine and/or bromine,
m has the value 1, 2 or 3, the substituents X being identical or different,
Y represents a hydrogen atom, halogen atom, an alkyl group, an alkyl group substituted by at least one halogen atom and/or an alkoxy group, halogen standing for fluorine, chlorine and/or bromine,
n has the value 1, 2, 3 or 4, the substituents Y being identical or different,
R₃ stands for a halogen atom or an alkyl group substituted by at least one halogen atom, halogen standing for fluorine, chlorine and/or bromine, or R₃ is a group of the -OR formula, in which R represents an alkyl group substituted by at least one halogen atom and halogen stands for fluorine, chlorine and/or bromine, or R is a substituted phenyl residue of the formula 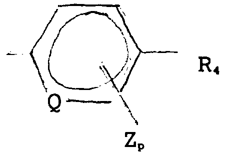 in which Z is a hydrogen atom, halogen atom, an alkyl, alkyl halide, polyalkyl halide, alkoxy, alkoxy halide and/or polyalkoxy halide group and p has the value 1, 2, 3 or 4, the substituents Z being identical or different and halogen standing for fluorine, chlorine and/or bromine; R₄ is a halogen atom or an alkyl group substituted by at least one halogen atom, halogen meaning fluorine, chlorine and/or bromine and Q standing for the CH group or a nitrogen atom,
and is contained in the agent mixed with a quantity of at least one triazole fungicide (component II) in the form of Azaconazole, Tebuconacole and/or Propiconazole producing a synergistic effect.

2. Agent according to Claim 1, characterised in that the component I is a benzoyl urea compound of the general formula 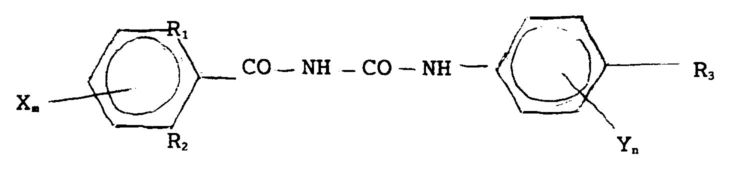 in which the substituents have the following significance:
R₁ is a fluorine, chlorine or hydrogen atom,
R₂ signifies a fluorine or chlorine atom,
X stands for hydrogen, m having the value 3
Y represents a hydrogen, fluorine and/or chlorine atom,
n has the value 1, 2, 3 or 4, the substituents Y being identical or different,
R₃ stands for a fluorine or chlorine atom or a group of the -OR formula, in which R represents an alkyl group with up to 6 C-atoms substituted by at least one halogen atom, or R is a substituted phenyl residue of the formula 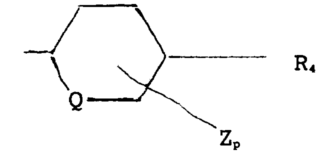
in which Z signifies a hydrogen, fluorine and/or chlorine atom and p has the value 1, 2, 3 or 4, the substituents Z being identical or different; R₄ stands for an alkyl group with up to 6 C-atoms, substituted by at least one halogen atom, the aforesaid halogen atoms preferably being fluorine and/or chlorine and Q stands for the CH group or a nitrogen atom.

3. Agent according to Claim 1 or 2, characterised in that the component I is Flufenoxurone, Hexaflumurone and/or Trifluorone.

4. Agent according to one of Claims 1 to 3, characterised in that the proportion by weight of component I to component II amounts to
1 : 2 to 1 : 20,000, preferably
1 : 10 to 1 : 15,000.

5. Agent according to one of Claims 1 to 4, characterised in that the agent contains
up to 99.94995 % by weight
of a mixture, consisting of at least one organic chemical binding agent and at least one thinning agent and/or solvent and/or at least one emulsifier and/or wetting agent.

6. Agent according to one of Claims 1 to 5, characterised in that the thinning agent and/or solvent contains an organic chemical solvent or solvent mixture, preferably an oily or oleaginous, difficultly volatile organic chemical solvent or solvent mixture or a mixture of water and/or at least one organic chemical solvent, preferably at least one oily or oleaginous, difficultly volatile organic chemical solvent or solvent mixture, and/or at least one emulsifier and/or wetting agent or consists thereof.

7. Agent according to one of Claims 1 to 6, characterised in that the organic chemical binding agent is replaced completely or partially by at least one fixing agent and/or at least one plasticizer.

8. Agent according to one of Claims 1 to 7, characterised in that it contains as the agent ready for use
0.00005 to 0.5 % by weight preferably
0.0001 to 0.2 % by weight,
of component I,
0.05 to 2 % by weight, preferably
0.25 to 1.5 % by weight,
of component II,
0.9 to 40 % by weight, preferably 3 to 33 % by weight,
of at least one organic chemical binding agent and/or plasticizer and/or fixing agent,
0 to 8 % by weight, preferably
0.1 to 4 % by weight,
of at least one colouring agent, colouring pigment and/or anti-corrosion agent, siccative and/or stabiliser which is water-soluble and/or insoluble in water and
44 to 99 % by weight, preferably
58 to 95 % by weight,
of a thinning agent, consisting of an organic chemical solvent or solvent mixture or of a mixture of water and at least one emulsifier and/or wetting agent.

9. Agent according to one of Claims 1 to 7, characterised in that as the concentrate it contains
0.002 to 5 % by weight, preferably
0.003 to 2 % by weight,
of component I,
0.01 to 20 % by weight, preferably
1 to 8 % by weight,
of component II and
2 to 85 % by weight, preferably
8 to 60 % by weight,
of at least one organic chemical binding agent and/or plasticizer and/or fixing agent as well as a residual constituent, consisting of an organic chemical solvent or solvent mixture or a mixture of water and at least one organic chemical solvent and at least one emulsifier and/or wetting agent as well as, if necessary, colouring agents, colouring pigments, anti-corrosion agents, siccatives and/or stabilisers.

10. Method for the protection of technical materials, especially of timber and timber materials, from damage or destruction by biological pests, especially wood-eating insects, characterised in that the timber or timber material is treated with an effective quantity of an agent according to one or more of Claims 1 to 9.

11. Method according to Claim 10, characterised in that the timber or timber material is treated with a quantity of 0.5 to 2,000 g, with respect to the synergistic active substance combination, per cubic metre of timber.

12. Use of the agent according to one of Claims 1 to 9 for controlling the larval stages of wood-damaging and/or wood-destroying insects in technical materials, especially timber and timber materials.

13. Use of the agent according to one of Claims 1 to 9 for the preventive protection of technical materials, especially timber and timber materials against the larval stages of wood-damaging and/or wood-destroying insects.

14. Use of the agent according to Claim 12 or 13, characterised in that the agent additionally has fungicidal properties and is used against wood-discolouring, wood-damaging and/or wood-destroying fungi.

15. Use of the agent according to Claim 14, characterised in that the agent contains more than 0.25 % by weight of the fungicidal component II.

16. Use of the agent according to one of Claims 1 to 9 as a priming coating agent, impregnation coating agent or as a colouring glaze in an application quantity of 0.002 to 1 g, with respect to the synergistic active substance combination per square metre of timber surface.

17. Use of the agent according to one of Claims 1 to 9 as a dipping or impregnating agent in a quantity of 30 to 150 g, with respect to the synergistic active substance combination, per cubic metre of timber.

## Revendications

1. Produit pour la protection de matériaux techniques, en particulier le bois et les matériaux à base de bois, contre une dégradation ou une destruction par des parasites biologiques, en particulier des insectes xylophages, à base d'au moins un agent actif insecticide, ainsi que d'au moins un diluant et/ou solvant et éventuellement d'au moins un liant de la chimie organique, éventuellement d'au moins un autre agent actif et éventuellement d'autres adjuvants de mise en oeuvre et additifs, caractérisé en ce que l'agent actif insecticide (constituant I) est un composé de benzoylurée de formule générale : 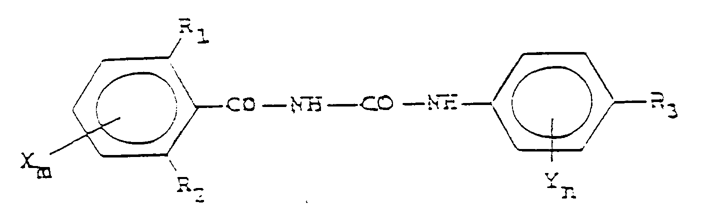 dans laquelle les substituants ont les significations suivantes :
R₁ est un atome d'halogène ou d'hydrogène,
R₂ est un atome d'halogène,
X est un atome d'hydrogène, un atome d'halogène, un groupe alkyle, un groupe alkyle substitué par au moins un atome d'halogène, un groupe alcoxy et/ou un groupe alcoxy substitué au moins par un atome d'halogène,
où les halogènes représentent chacun le fluor, le chlore et/ou le brome,
m est égal à 1, 2 ou 3, les substituants X étant identiques ou différents,
Y représente un atome d'hydrogène, un atome d'halogène, un groupe alkyle, un groupe alkyle substitué par au moins un atome d'halogène, et/ou un groupe alcoxy, es halogènes représentant le fluor, le chlore et/ou le brome,
n est égal à 1, 2, 3 ou 4, les substituants Y étant identiques ou différents,
R3 représente un atome d'halogène ou un groupe alkyle substitué par au moins un atome d'halogène, où les halogènes sont le fluor, le chlore et/ou le brome, ou bien R₃ est un groupe de formule -OR, dans laquelle R est un groupe alkyle substitué par au moins un atome d'halogène, et les halogènes sont le fluor, le chlore et/ou le brome, ou encore R est un radical phényle substitué de formule 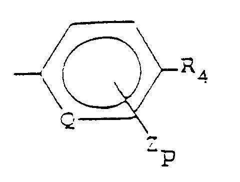 dans laquelle Z est un atome d'hydrogène, un atome d'halogène, un groupe alkyle, halogénalkyle, polyhalogénalkyle, alcoxy, halogénalcoxy et/ou polyhalogénalcoxy, et p est égal à 1, 2, 3 ou 4, les substituants Z étant identiques ou différents, et les halogènes étant le fluor, le chlore et/ou le brome ; R₄ est un atome d'halogène ou un groupe alkyle substitué par au moins un atome d'halogène, les halogènes étant le fluor, le chlore et/ou le brome, et Q représente le groupe CH ou un atome d'azote,
et est contenu dans le produit en mélange avec une quantité produisant une action synergique d'au moins un fongicide du type triazole (constituant II) sous forme d'azaconazol, de tébuconazol et/ou de propiconazol.

2. Produit selon la revendication 1, caractérisé en ce que le constituant I est un composé de benzoylurée de formule générale : 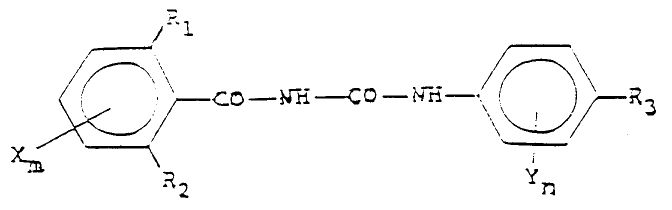 dans laquelle les substituants ont les significations suivantes :
R₁ est un atome de fluor, de chlore ou d'hydrogène,
R₂ est un atome de fluor ou de chlore,
X est un atome d'hydrogène, m étant égal à 3,
Y est un atome d'hydrogène, de fluor et/ou de chlore,
n est égal à 1, 2, 3 ou 4, les substituants Y étant identiques ou différents,
R₃ représente un atome de fluor ou de chlore, ou un groupe de formule -OR, dans laquelle R est un groupe alkyle substitué par au moins un atome d'halogène, ayant jusqu'à 6 atomes de carbone, ou encore R est un radical phényle substitué de formule 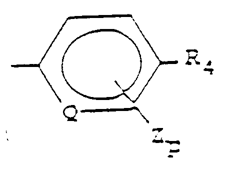
dans laquelle Z est un atome d'hydrogène, un atome de fluor et/ou de chlore, et p est égal à 1, 2, 3 ou 4, les substituants Z étant identiques ou différents ; R4 est un groupe alkyle substitué par au moins un atome d'halogène, ayant jusqu'à 6 atomes de carbone, les atomes d'halogène mentionnés ci-dessus étant de préférence le fluor et/ou le chlore, et Q représente le groupe CH ou un atome d'hydrogène.

3. Produit selon la revendication 1 ou 2, caractérisé en ce que le constituant I est le flufénoxuron, l'hexaflumuron et/ou le trifluoron.

4. Produit selon l'une des revendications 1 à 3, caractérisé en ce que le rapport pondéral du constituant I au constituant II est de 1:2 à 1:20 000, et de préférence de 1:10 à 1:15 000.

5. Produit selon l'une des revendications 1 à 4, caractérisé en ce que le produit contient jusqu'à 99,94995 % en poids d'un mélange constitué d'au moins un liant de la chimie organique et d'au moins un diluant et/ou solvant et/ou d'au moins un émulsifiant et/ou mouillant.

6. Produit selon l'une des revendications 1 à 5, caractérisé en ce que le diluant et/ou solvant est un solvant ou un mélange de solvants de la chimie organique, difficilement volatil, huileux ou du type huileux, ou un mélange d'eau et/ou d'au moins un solvant de la chimie organique, de préférence un solvant ou un mélange de solvants de la chimie organique, difficilement volatil, huileux ou de type huileux, et/ou d'au moins un émulsifiant et/ou mouillant, ou le contient.

7. Produit selon l'une des revendications 1 à 6, caractérisé en ce que le liant de la chimie organique est en totalité ou en partie remplacé par un agent fixateur et/ou au moins un plastifiant.

8. Produit selon l'une des revendications 1 à 7, caractérisé en ce qu'il contient en tant que produit prêt à l'emploi :
de 0,00005 à 0,5 % en poids, et de préférence
de 0,0001 à 0,2 % en poids
du constituant I,
de 0,05 à 2 % en poids, et de préférence,
de 0,25 à 1,5 % en poids
du constituant II,
de 0,9 à 40 % en poids, et de préférence
de 3 à 33 % en poids
d'au moins un liant et/ou plastifiant et/ou agent fixateur de la chimie organique,
de 0 à 8 % en poids, et de préférence
de 0,1 à 4 % en poids
d'au moins un colorant, pigment coloré et/ou anticorrosion soluble dans l'eau et/ou insoluble dans l'eau, d'un siccatif et/ou d'un stabilisant, et
de 44 à 99 % en poids, et de préférence
de 58 à 95 % en poids,
d'un diluant constitué d'un solvant ou d'un mélange de solvants de la chimie organique ou d'un mélange d'eau et d'au moins un émulsifiant et/ou mouillant.

9. Produit selon l'une des revendications 1 à 7, caractérisé en ce qu'il contient, sous forme d'un concentré :
de 0,002 à 5 % en poids, et de préférence
de 0,003 à 2 % en poids,
du constituant I,
de 0,01 à 20 % en poids, et de préférence
de 1 à 8 % en poids,
du constituant II, et
de 2 à 85 % en poids, et de préférence
de 8 à 60 % en poids
d'au moins un liant et/ou plastifiant et/ou agent fixateur de la chimie organique, ainsi qu'un constituant résiduel, constitué d'un solvant ou d'un mélange de solvants de la chimie organique ou d'un mélange d'eau et d'au moins un solvant de la chimie organique et d'au moins un émulsifiant et/ou mouillant, et éventuellement de colorants, pigments colorés, agents anticorrosions, siccatifs et/ou stabilisants.

10. Procédé pour protéger des matériaux techniques, en particulier le bois et les matériaux à base de bois, contre une dégradation ou une destruction par des parasites biologiques, en particulier des insectes xylophages, caractérisé en ce qu'on traite le bois ou le matériau à base de bois avec une quantité efficace d'un produit selon l'une ou plusieurs des revendications 1 à 9.

11. Procédé selon la revendication 10, caractérisé en ce que le' bois ou le matériau à base de bois est traité par une quantité de 0,5 à 2000 g, de la combinaison synergique de matières actives, par mètre cube de bois.

12. Utilisation du produit selon l'une des revendications 1 à 9 pour maîtriser les stades larvaires d'insectes qui dégradent et/ou détruisent le bois dans les matériaux techniques, en particulier le bois et les matériaux à base de bois.

13. Utilisation du produit selon l'une des revendications 1 à 9, pour la protection préventive des matériaux techniques, en particulier le bois et les matériaux à base de bois, vis à vis des stades larvaires d'insectes qui détruisent et/ou dégradent le bois.

14. Utilisation du produit selon la revendication 12 ou 13, caractérisée en ce que le produit comporte en outre des propriétés fongicides et est utilisé contre les champignons qui changent la couleur, qui dégradent et/ou qui détruisent le bois.

15. Utilisation du produit selon la revendication 14, caractérisée en ce que le produit contient plus de 0,25 % en poids du constituant fongicide II.

16. Utilisation du produit selon l'une des revendications 1 à 9 en tant que produit pour couche de fond, produit pour peinture d'imprégnation ou comme lasure colorée en une quantité d'application de 0,002 à 1g de combinaison synergique de matières actives par mètre carré de surface du bois.

17. Utilisation du produit selon l'une des revendications 1 à 9 en tant qu'agent d'immersion ou d'imprégnation en une quantité de 30 à 150 g de la combinaison synergique de matières actives par mètre cube de bois.
